# EUROPÄISCHE PATENTSCHRIFT

(11) **EP 0 583 673 B1**
(45) Veröffentlichungstag und Bekanntmachung des Hinweises auf die Patenterteilung: **17.01.1996**
(21) Anmeldenummer: 93112381.4
(22) Anmeldetag: 03.08.1993
(51) Int. Cl.: B65G 69/28

(54) **Überladebrücke für Rampen**
Loading bridge for ramps
Pont de transbordement pour rampes

(30) Priorität: 18.08.1992 DE 4227294
(43) Veröffentlichungstag der Anmeldung: 23.02.1994
(73) Patentinhaber: ALTEN GERÄTEBAU GMBH, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 229 311
- DE-A- 3 412 068

## Beschreibung

Die Erfindung betrifft eine Überladebrücke für Rampen mit einer an ihrem hinteren, rampenseitigen Ende um eine Waagerechte Achse verschwenkbaren Brückenplatte, die an ihrem freien Ende mit einer klappbaren Verlängerung zur Auflage auf dem zu be- bzw. entladenden Fahrzeug versehen ist, wobei die Verlängerung zur Einnahme ihrer Ruhestellung nach unten klappbar ist und zwischen Brückenplatte und Rampe ein längsverschiebbarer Bolzen zur Halterung der Brückenplatte in ihrer Ruhelage wirksam ist.

Bei bekannten Überladebrücken dieser Art ( DE-C-34 39 651 ) soll der längsverschiebbare Bolzen unterhalb der Brückenplatte befindliche Stützmittel für die Brückenplatte erübrigen. Er wird durch eine Klappbewegung der Verlängerung betätigt.Demgegenüber geht die Erfindung von der Erkenntnis aus, dass die Betriebssicherheit der eingangs erwähnten Überladebrücken dann am grössten ist, wenn die Inbetriebnahme der Überladebrücke von einem angedockten Fahrzeug mit der zu be- bzw. entladenden Plattform abhängig ist und zudem der Bolzen lediglich eine Sperrfunktion ausübt bzw. die Stützung der nichtin Betrieb befindlichen, im wesentlichen in der Rampenebene angeordneten Brückenplatte mechanisch von dem vorerwähnten Bolzen unabhängig ist.

Demgemäss liegt der Erfindung die Aufgabe zugrunde, die Betriebssicherheit der eingangs erwähnten Überladebrücken unter Berücksichtigung der vorgenannten Erkenntnisse zu steigern.

Zur Lösung dieser Aufgabe ist erfindungsgemäss dem elektromagnetisch betätigbaren Bolzen ein vom angedockten Fahrzeug beeinflussbarer elektrischer Schalter zugeordnet, zudem erfolgt die Abstützung der Brückenplatte in ihrer Ruhestellung durch die nach unten geklappte, sich an einem festen Widerlager anlegende Verlängerung und zudem sichert der Bolzen die Brückenplatte bei nicht angedocktem Fahrzeug gegen Abheben.

Eine solche Ausbildung der Überladebrücke hat den grossen Vorteil, dass die Überladebrücke überhaupt nur dann durch Verschwenken der Verlängerung und der Brückenplatte in die Betriebsstellung geführt werden kann, wenn sich ein Fahrzeug vor der Rampe in vorgeschriebener Stellung befindet. Nur dann kann die Brückenplatte nach oben geschwenkt werden, um dann auch die Verlängerung ausklappen zu können. Der erwähnte Bolzen wirkt somit gewissermassen als Schloss; ist es durch Einziehen des Bolzens nicht geöffnet, so kann die Brückenplatte weder nach oben noch nach unten geschwenkt werden. Aber auch die Verlängerung kann nicht nach oben geklappt werden, da sie mit ihrer Spitze in dem gewöhnlich vertieften Widerlager angeordnet ist, das ein Klappen der Verlängerung nur dann zulässt, wenn die Brückenplatte zumindest um ein geringes Mass hochgeschwenkt ist. Hinzu kommt, dass der Bolzen bei in Ruhestellung befindlicher Brückenplatte infolge der Stützung durch die Verlängerung nicht nennenswert belastet ist, um so dessen Verschiebung in Längsrichtung mit vertretbar bemessenen Elektromagneten verlagern zu können.

Besonders vorteilhaft ist es, wenn der den Elektromagnet beeinflussende elektrische Schalter Bestandteil eines Radkeiles ist und durch Ansetzen an ein angedocktes Fahrzeug bzw. durch das Rad eines Fahrzeuges betätigt werden kann.

Der Elektromagnet mit dem von ihm betätigten Bolzen wird vorzugsweise am vorderen Ende der Brückenplatte angeordnet; der Bolzen kann zudem gegen eine Rückstellkraft eindrückbar sein z.B. durch eine Auflaufschräge. Damit kann die Brückenplatte bei ausgeklappter Verlängerung und angedocktem Fahrzeug mit ihrem vorderen Ende unter die Rampenebene geschwenkt werden, wenn z.B. die Plattform eine entsprechend geringe Höhe aufweist.

Weitere Einzelheiten der Erfindung werden anhand der Zeichnung erläutert, in der ein Ausführungsbeispiel der Erfindung dargestellt ist.

Es zeigen :
- Fig. 1: einen senkrechten Längsschnitt nach der Linie I - I von Fig. 2,
- Fig. 2: eine Teildraufsicht auf eine in Betrieb befindliche Überfahrbrücke für Rampen,
- Fig. 3: einen Teilschnitt nach der Linie III - III von Fig. 2 und
- Fig. 4: eine Hilfseinrichtung für die Brücke gemäss Fig. 1 - 3 in Form eines Radkeils im senkrechten Längsschnitt.

Die Überfahrbrücke weist eine Brückenplatte 1 auf. Sie ist an ihrem hinteren Ende um eine Querachse 2 an der Rampe 3 verschwenkbar. Bei Nichtgebrauch schliesst die Oberfläche der Brückenplatte 1 mit der Rampenoberfläche ab. Beim Brückenbetrieb kann dies gemäss Zeichnung ebenfalls geschehen, jedoch sind auch Stellungen des vorderen Endes der Brückenplatte 1 oberhalb und unterhalb der Brückenoberfläche möglich.

Am vorderen Ende der Brückenplatte 1 befindet sich eine im Querschnitt etwa L-förmige Verlängerung 4, die wahlweise zur Einnahme der Ruhestellung im Sinne des Pfeiles a nach unten geklappt werden kann, während sie in der Arbeitsstellung mit der Oberfläche der Brückenplatte 1 abschliesst. Unterhalb der Brückenplatte 1 befindet sich in der Rampe eine der Plattengrösse entsprechende Ausnehmung 5, in die die Brückenplatte 1 eintauchen kann.

Die Verlängerung 4 ist durch mehrere Gelenke 7 mit Gelenkbolzen 8 mit der Brückenplatte 1 verbunden. Der lange Schenkel 9 liegt beim Brückenbetrieb auf der Plattform des zu be- bzw. entladenden Fahrzeuges auf, die mit 6 bezeichnet ist; dabei stützt sich die Brückenplatte 1 über den Schenkel 9 auf der Plattform 6 ab. In der Ruhestellung der Brücke hingegen, stützt sich die Brückenplatte 1 vorne über den nach unten geklappten Schenkel 9 mit der Spitze auf einem in der Ausnehmung 5 befindlichen festen Widerlager 50 ab, das eine Vertiefung zum Eingriff der Spitze aufweist und z.B. als Profileisen ausgebildet sein kann, also damit einen gewissen Formschluss zur Spitze des Schenkels 9 herbeiführen kann.

Der kurze Schenkel 10 der Verlängerung 4 besteht aus einem Gegengewicht für den langen Schenkel 9 in Form eines Flacheisens 11. Durch Totpunktüberschreitung wird dabei der Schenkel 9 stets in seiner gewünschten Lage gehalten. Um die dabei erforderliche Klappbewegung durchführen zu können, ist die für das Gelenk 7 erforderliche Lasche 13 vorgesehen, die mit der Brückenplatte 1 verschweisst ist. Zudem ist der kurze Schenkel 10 mit der Lasche 13 entsprechenden Schlitzen 15 versehen. In der Gebrauchsstellung der Brücke liegt der Grund des Schlitzes 15 auf der Lasche 13 auf.

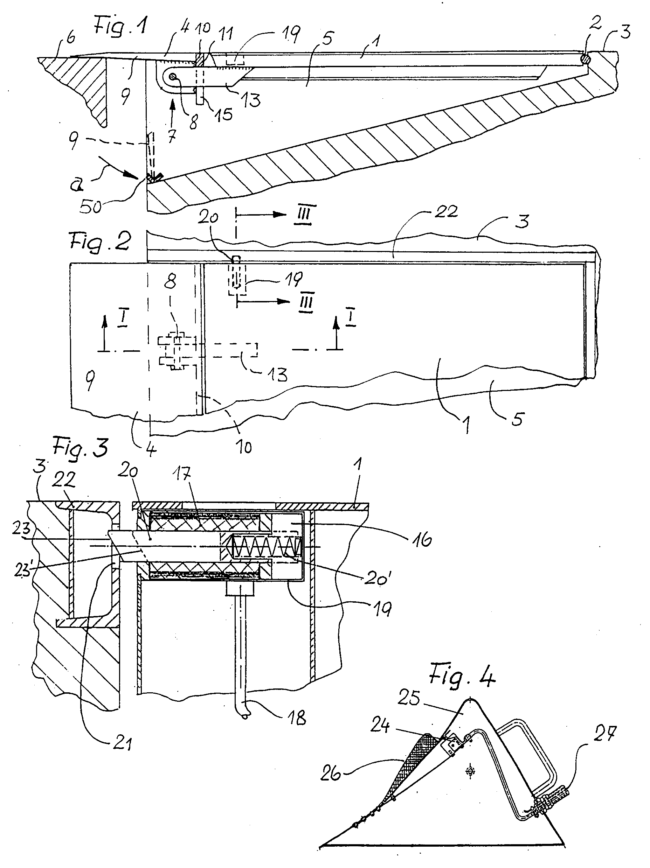

Zu beiden Seiten der Überfahrbrücke befindet sich nahe unterhalb der Oberfläche der Brückenplatte 1 an dieser ein Elektromagnet 16 mit Spule 17, Zuleitung 18, einem Gehäuse 19 und einem Anker in Form eines Bolzens 20, der quer zur Brückenlängsrichtung angeordnet ist und gemäss Fig. 3 in der Arretierstellung wiedergeben ist. Dabei greift er in die Aussparung 21 der Randarmierung 22 für die Ausnehmung 5 ein. Am hinteren Ende des Bolzens 20 ist eine Rückholfeder als Druckfeder 20' vorgesehen, die den Bolzen 20 nach vorne führt, wenn der Elektromagnet 16 ausgeschaltet ist ( Fig. 3 ). Zudem ist der Bolzen 20 am vorderen Ende mit einer Auflaufschräge 23 versehen in der Weise, dass beim Auflaufen des Bolzens 20 auf die Randarmierzung 22 beim Absenken der Brückenplatte 1 der Bolzen 20 gegen die Wirkung der Druckfeder 20' in das Gehäuse 19 getrieben wird. Mit 23' ist Auflaufschräge 23 für den eingezogenen Zustand des Bolzens 20 bezeichnet ( Magnet in Betrieb ).

Die elektrische Speisung des Elektromagneten 16 erfolgt über einen Schalter 24 innerhalb eines Radkeils 25; wenn das Rad des Fahrzeuges den Hebel 26 des Radkeils 25 beaufschlagt wird der Schalter 24 betätigt. Damit wird der Elektromagnet 16 an Spannung gelegt und sein Bolzen 20 eingezogen. Die Zuleitung für den Radkeil 25 ist mit 27 bezeichnet. Ist der Hebel 26 nicht beaufschlagt, befindet sich der Bolzen 20 in der Stellung gemäss Fig. 3.

Ist die Überfahrbrücke in ihrer Ruhestellung, nimmt also die Brückenplatte 1 die Stellung gemäss Fig. 1 ein, jedoch bei abgeklappter Verlängerung 4, so befindet sich der Bolzen 20 in der Sperrstellung gemäss Fig. 3; die Brückenplatte 1 ist also gegen ein Hochschwenken gesperrt, während gleichzeitig der Schenkel 9 durch formschlüsgen Eingriff in das Widerlager 50 daran gehindert ist, verschwenkt zu werden. Demnach ist die Überfahrbrücke gegen eine Benutzung gesperrt.

Soll nun die Brücke in Betrieb genommen werden, wird der Radkeil 25 an ein Rad eines bereits angedockten Fahrzeuges angelegt, worauf der Bolzen 20 eingezogen wird. Nunmehr kann die Brückenplatte 1 nach oben geschwenkt, die Verlängerung 4 ausgeklappt und durch Absenken der Brückenplatte 1 die Verlängerung 4 zur Auflage auf der Plattform 6 gebracht werden.

Für den Fall, dass sich das Fahrzeug entfernt hat, die Verlängerung ausgeklappt ist, kann auch unter diesen Voraussetzungen die Brücke in die Ruhelage zurückgeführt werden. Der bereits aufgrund der Federkraft in die Sperrstellung gelangte Bolzen 20 ist beim Absenken der Brückenplatte 1 nicht hinderlich, weil dabei die Auflauffläche 23 wirksam wird und dabei der Bolzen 20 die Armierung 22 gewissermassen überspringen, bis schliesslich das freie Ende des Bolzens 20 einrastet und die Stellung gemäss Fig. 3 hergestellt ist, wobei dann auch der Schenkel 9 mit seiner Spitze in das Widerlager 50 eingerastet hat.

Es sei erwähnt, dass der Bolzen 20 ggfs. auch an der Rampe sinngemäss gelagert werden kann, vorzugsweise wird er jedoch im Sinne von Fig. 3 fest an der Brückenplatte 1 gelagert.

Es sei erwähnt, dass die Erfindung insb. bei solchen Überladebrücken benutzt werden soll, bei denen sowohl das Verschwenken der Brückenplatte als auch das Klappen der Verlängerung von Hand erfolgen soll.

## Patentansprüche

1. Überladebrücke für Rampen mit einer am rampenseitigen Ende um eine waagerechte Achse an der Rampe schwenkbaren Brückenplatte, die am freien Ende mit einer klappbaren Verlängerung zur Auflage auf der zu be- bzw. entladenden Plattform eines andockenden Fahrzeuges versehen ist, wobei die Verlängerung zur Einnahme ihrer Ruhestellung nach unten klappbar ist und zwischen Brückenplatte und Rampe ein längsverschiebbarer Bolzen zur Halterung der Brückenplatte in ihrer Ruhelage wirksam ist, dadurch gekennzeichnet, dass dem elektromagnetisch betätigten, vorzugsweise auf jeder Brückenseite vorgesehenen Bolzen (20) ein vom andockenden Fahrzeug beeinflussbarer elektrischer Schalter (24) zugeordnet ist, dass die Abstützung der Brückenplatte (1) an ihrem vorderen Ende in ihrer Ruhestellung durch die nach unten geklappte, sich an einem festen Widerlager (50) angelegte Verlängerung (4) erfolgt und dass der Bolzen (20) die Brückenplatte (1) bei nicht betätigtem Schalter (24) gegen Hochschwenken sichert.

2. Überladebrücke nach Anspruch 1, dadurch gekennzeichnet, dass der Schalter (24) Bestandteil eines Radkeils (25) für das angedockte Fahrzeug ist.

3. Überladebrücke nach Anspruch 1, dadurch gekennzeichnet, dass der bzw. die Elektromagnete (16) für den Bolzen (20) an der Brückenplatte (1) befestigt sind.

4. Überladebrücke nach Anspruch 1, dadurch gekennzeichnet, dass der Bolzen (20) elektromagnetisch einziehbar und durch eine Rückstellkraft (20') ausschiebbar ist.

5. Überladebrücke nach Anspruch 1, dadurch gekennzeichnet, dass der Bolzen (20) an seinem freien Ende mit einer Auflaufschräge (23) in der Weise versehen ist, dass der Bolzen beiabgeschaltetem Elektromagnet (16) und einem Absenken der Brückenplatte (1) von einer Stellung oberhalb der Rampenoberfläche nach unten in die eingezogene Stellung abdrängbar ist.

6. Überladebrücke nach Anspruch 1, dadurch gekennzeichnet, dass zwischen dem Widerlager (50) und der nach unten geklappten Verlängerung (4) ein ein Hochschwenken der Verlängerung ausschliessender Formschluss besteht.

7. Überladebrücke nach Anspruch 1 und 6, dadurch gekennzeichnet, dass der in der Arretierstellung befindliche Bolzen (20) mit einem so geringen Spiel in die zugehörige Aussparung (21) eingreift und der Formschluss derart gegeben ist, dass bei einem in der Arretierstellung befindlichen Bolzen (20) die Verlängerung (4) nicht verschwenkbar, insb. nicht hochklappbar ist.

## Claims

1. Loading bridge for loading platforms, including a bridge plate which is pivotable at the platform end about a horizontal axis on the platform and is provided at its free end with a displaceable extension member for resting on the deck to be loaded or unloaded of a docking vehicle, the extension member being downwardly displaceable to assume its inoperative position, and a longitudinally displaceable pin being operative between bridge plate and platform to retain the bridge plate in its inoperative position, characterised in that an electric switch (24), which can be influenced by the docking vehicle, is associated with the electromagnetically actuated pin (20), which is preferably provided on each side of the bridge, in that the bridge plate (1) is supported at its front end in its inoperative position by the downwardly displaced extension member (4), which fits onto a fixed support (50), and in that the pin (20) prevents the bridge plate (1) from pivoting upwardly when switch (24) is not actuated.

2. Loading bridge according to claim 1, characterised in that the switch (24) is a component part of a wheel chock (25) for the docked vehicle.

3. Loading bridge according to claim 1, characterised in that the electromagnet or electromagnets (16) for the pin (20) is or are mounted on the bridge plate (1).

4. Loading bridge according to claim 1, characterised in that the pin (20) is electromagnetically retractable and can be pushed-out by a restoring force (20').

5. Loading bridge according to claim 1, characterised in that the pin (20) is provided at its free end with an inclined leading face (23) such that the pin is downwardly displaceable into its retracted position when the electromagnet (16) is switched-off and the bridge plate (1) is lowered from a position above the platform surface.

6. Loading bridge according to claim 1, characterised in that there is an interlocking between the support (50) and the downwardly displaced extension member (4), such interlocking preventing the extension member from pivoting upwardly.

7. Loading bridge according to claims 1 and 6, characterised in that the pin (20), in its locking position, engages in the associated recess (21) with such little clearance and the interlocking is such that, when a pin (20) is in its locking position, the extension member (4) is not pivotable and, more especially, is not upwardly displaceable.

## Revendications

1. Niveleur de quai ayant un tablier qui peut basculer par rapport à un axe horizontal à son extrémité arrière du côté du quai, et qui est muni à son extrémité libre d'un prolongement rabattable destiné à s'appuyer sur la plateforme à charger ou à décharger d'un véhicule qui accoste, le prolongement pouvant être rabattu vers le bas pour prendre sa position de repos et un axe, qui est placé entre le tablier et la quai et qui coulisse longitudinalement, servant à maintenir le tablier en sa position de repos, caractérisé en ce qu'est associé à l'axe (20), actionné électromagnétiquement et prévu de préférence de part et d'autre du niveleur, un interrupteur (24) électrique pouvant être influencé par le véhicule qui accoste, en ce que l'appui du tablier (1) à son extrémité avant s'effectue, en sa position de repos, par le prolongement (4) rabattu vers le bas et appuyé contre une butée (50) rigide, et en ce que l'axe (20) empêche le tablier (1) de se déplacer vers le haut lorsque l'interrupteur (24) n'est pas actionné.

2. Niveleur de quai suivant la revendication 1, caractérisé en ce que l'interrupteur (24) fait partie d'une cale (25) de roue destinée au véhicule qui accoste.

3. Niveleur de quai suivant la revendication 1, caractérisé en ce que le ou les électroaimants (16) destinés à l'axe (20) sont fixés au tablier (1).

4. Niveleur de quai suivant la revendication 1, caractérisé en ce que l'axe (20) peut être rentré en étant commandé électromagnétiquement et peut être repoussé par une force de rappel (20').

5. Niveleur de quai suivant la revendication 1, caractérisé en ce que l'axe (20) est muni à son extrémité libre d'un biseau (23) d'entrée de manière que l'axe puisse être repoussé, lorsque l'électroaimant (16) est débranché et lorsque le tablier (1) s'abaisse, vers le bas d'une position au-dessus de la surface du quai à la position rentrée.

6. Niveleur de quai suivant la revendication 1, caractérisé en ce qu'il y a entre la butée (50) et le prolongement (4) rabattu vers le bas une complémentarité de forme qui exclut tout basculement vers le haut du prolongement.

7. Niveleur de quai suivant les revendications 1 ou 6, caractérisé en ce que l'axe (20) qui se trouve en la position de blocage pénètre dans l'évidement (21) associé avec un jeu si petit et en ce que la complémentarité de forme est telle que, lorsqu'un axe (20) se trouve en la position de blocage, le prolongement (4) ne peut pas basculer, ni, notamment, être rabattu vers le haut.
